# EUROPÄISCHE PATENTSCHRIFT

(11) **EP 1 387 965 B1**
(45) Veröffentlichungstag und Bekanntmachung des Hinweises auf die Patenterteilung: **30.01.2008**
(21) Anmeldenummer: 02730156.3
(22) Anmeldetag: 13.04.2002
(51) Int. Cl.: F16C 23/08, F16D 23/14

(54) **SELBSTEINSTELLENDES KUPPLUNGSAUSRÜCKLAGER**
SELF-ADJUSTING CLUTCH RELEASE BEARING
BUTEE DE DEBRAYAGE A AUTOREGLAGE

(30) Priorität: 18.05.2001 DE 10124663
(43) Veröffentlichungstag der Anmeldung: 11.02.2004
(73) Patentinhaber: Schaeffler KG, 91074 Herzogenaurach (DE)
(72) Erfinder: DITTMER, Steffen, 91074 Herzogenaurach (DE); WINKELMANN, Ludwig, 91056 Erlangen (DE); KLÖPFER, Bernhard, 91438 Bad Windsheim (DE)
(86) Internationale Anmeldenummer: PCT/EP2002/004123
(87) Internationale Veröffentlichungsnummer: WO 2002/095250

(56) Entgegenhaltungen:
- DE-A- 19 949 909
- DE-U- 7 245 141
- FR-A- 2 109 947
- FR-A- 2 196 692
- GB-A- 1 030 087
- GB-A- 2 339 000

## Beschreibung

### Gebiet der Erfindung

Die Erfindung bezieht sich auf ein Ausrücklager für eine in Kraftfahrzeugen eingesetzte Schalttrennkupplung. Das als ein Schrägschulterlager gestaltete Wälzlager umfasst einen drehstarr angeordneten Lagerring sowie einen umlaufenden Lagerring, zwischen denen die in einem Käfig eingesetzten Wälzkörper geführt sind. Zur Erzielung eines selbsteinstellenden bzw. selbstjustierenden Ausrücklagers ist ein Lagerring mit einer als Kugelkalottensegment gestalteten Kontaktzone versehen, die an einem komplementär ausgebildeten Kugelkalottensegment eines Einstellrings abgestützt ist, wodurch eine schwenkbare Anordnung des Ausrücklagers gegenüber dem Einstellring gewährleistet ist. Der Einstellring kann dabei sowohl dem umlaufenden Lagerring als auch dem drehstarr angeordneten Lagerring zugeordnet werden.

### Hintergrund der Erfindung

Selbsteinstellende bzw. selbstjustierende Ausrücklager werden eingesetzt, um einen fertigungsbedingten Axialschlag der Schalttrennkupplung bzw. deren Tellerfeder auszugleichen. Diese Maßnahme reduziert den Verschleiß und verbessert damit gleichzeitig die Lebensdauer des Ausrücklagers.

Im eingebauten Zustand ist das Ausrücklager Teil einer Ausrückvorrichtung und gemeinsam mit einem Gehäuse auf einer Führungshülse axial verschiebbar angeordnet. Die axiale Verschiebung erfolgt über einen Ausrückhebel oder einen Zentralausrücker, wobei die Ausrückbewegung mittels eines Kupplungspedals oder automatisiert durch einen Kupplungsaktuator eingeleitet werden kann. Der Aufbau des Ausrücklagers sieht vor, dass sowohl der umlaufende Lagerring als auch der drehstarr angeordnete Lagerring über einen Ringboden an einer Tellerfeder bzw. mittelbar oder unmittelbar an dem Gehäuse abgestützt ist. Der insbesondere von den Tellerfedern fertigungsbedingt verursachte, auf das Axiallager übertragene Axialschlag führt zu einem Kupplungsrupfen der Schalttrennkupplung und damit zu Komforteinbußen. Toleranzbedingt kann es im eingebauten Zustand der Ausrückvorrichtung bzw. des Ausrücklagers zu einem achsparallelen Versatz der kraftübertragenden Wellen zwischen der Brennkraftmaschine und dem Schaltgetriebe kommen, zwischen denen das Ausrücklager angeordnet ist. Das selbstjustierende bzw. selbsteinstellende Ausrücklager kompensiert den achsparallelen Versatz, vermeidet ein Kupplungsrupfen bzw. nachteilige Vibrationen und verbessert insgesamt den Komfort.

Aus dem bekannten Stand der Technik sind verschiedene selbsteinstellende Ausrücklager bekannt.

Der DE 72 45 141 U ist ein Ausrücklager zu entnehmen, bei dem zwischen der Tellerfeder bzw. den Federzungen der Schalttrennkupplung und dem Innenring des Ausrücklagers ein Einstellring vorgesehen ist. Die Kontaktzone zwischen dem Einstellring und dem Innenring ist dabei komplementär kugelförmig gestaltet, wodurch sich die unmittelbar abstützenden Bauteile gegeneinander verschieben bzw. ausrichten können. Bei dem bekannten Lager ist vorgesehen, dass der Einstellring und der Innenring aus gleichen Werkstoffen hergestellt sind. Diese Maßnahme begünstigt eine nachteilige Reibrostbildung in der Kontaktzone beider Bauteile, was den Verschleiß erhöht und gleichzeitig eine nachteilige Geräuschentwicklung verursacht.

Aus der DE 19949909 ist auch ein Ausrücklager bekannt, das selbsteinstellend ist.

### Zusammmenfassung der Erfindung

Aufgabe der vorliegenden Erfindung ist es, ein selbsteinstellendes Ausrücklager zu realisieren mit einer verschleißfesten und reibungsarmen Kontaktzone zwischen den gegeneinander schwenkbaren Bauteilen, einem Lagerring und dem Einstellring.

Diese Problemstellung wird durch die Verwendung eines Gleitelementes gelöst, welches aus einem thermoplastischen Kunststoff hergestellt ist. Dieser Werkstoff besitzt eine hohe Temperatur-Wechselbeanspruchung sowie eine gegenüber bisherigen Werkstoffen verbesserte Rissbeständigkeit. Weiterhin ist dieser Werkstoff reibungsarm und aufgrund der Härte bzw. Festigkeit ausreichend verschleißfest, wodurch sich eine erhöhte Lebensdauer einstellt, die der Lebensdauer der Brennkraftmaschine entspricht.

Vorzugsweise werden als thermoplastische Kunststoffe hoch wärmebeständige Polyamide oder andere hoch wärmebeständiger thermoplastischer Kunststoffe wie Polyaryletherketone (PAEK) eingesetzt. Diese Kunststoffe können zur Beeinflussung der Werkstoffeigenschaft mit Zuschlagstoffen versehen werden. Derartige die Reibung, den Verschleiß sowie die Festigkeit steigernden bzw. positiv beeinflussenden Zuschlagstoffe, optimieren die thermoplastischen Kunststoffe, die damit bevorzugt zur Herstellung eines Gleitelementes für ein selbsteinstellendes Ausrücklager einsetzbar sind. Weiterhin zeichnen sich derartige thermoplastischen Kunststoffe in Verbindung mit den zuvor genannten Zuschlagstoffen durch eine gute Verarbeitbarkeit und einem Kostenvorteil aus.

Aufgrund der vorteilhaft geringen Rissbeständigkeit der thermoplastischen Kunststoffe kann dieser Werkstoff problemfrei mit einem aus Stahl hergestellten Einstellring oder Lagerring kombiniert werden. Als Wandstärke für das Gleitelement ist ein Bereich von 0,5 bis 6mm vorgesehen.

Vorteilhafte Ausgestaltungen der Erfindung sind Gegenstand der abhängigen Ansprüche 2 bis 7.

Als bevorzugter Werkstoff zur Herstellung des erfindungsgemäßen Gleitelementes ist PA 46 CF 30 / PTFE 5 / H vorgesehen. Die Kombination des thermoplastischen Kunststoffs mit Kohlefasern als Zuschlagstoff und Polytetrafluorethylen als Festschmierstoff bildet eine ideale Kombination, zur Optimierung der Reibung und des Verschleißes, um damit die geforderte erhöhte Lebensdauer zu erreichen.

Erfindungsgemäß kann das aus einem thermoplastischen Kunststoff hergestellte Gleitelement sowohl dem Einstellring als auch dem Lagerring zugeordnet werden.

Eine vorteilhafte Ausgestaltung der Erfindung sieht vor, das Gleitelement als einen Belag unmittelbar auf den Einstellring oder den entsprechenden Lagerring aufzuspritzen. Für ein derartiges Gleitelement bietet sich an, die Trägerfläche mit einer beispielsweise umlaufenden Nut zu versehen, die beim Spritzgießen vom Material des Gleitelementes ausgefüllt, eine wirksame Fixierung und damit eine dauerhafte Verbindung beider Bauteile bewirkt.

Vorzugsweise wird zur Herstellung des Gleitelementes ein Spritzgießverfahren eingesetzt. Die bei einem Spritzgießen auftretenden Schrumpfspannungen sind erfindungsgemäß kontrollierbar, indem die Trägerfläche des Innenrings oder des Einstellrings beispielsweise mit einer achsparallelen oder schraubenlinienförmig verlaufenden Kerbnut versehen ist, die beim Spritzgießen mit dem Werkstoff des Gleitelementes ausgefüllt wird. Diese Maßnahme bewirkt gleichzeitig eine wirksame Verdrehsicherung zwischen dem Gleitelement und dem Lagerring oder dem Einstellring.

Die Erfindung schließt ebenfalls eine kraftschlüssige Befestigung des Gleitelementes ein, wozu sich insbesondere eine Verklebung des Gleitelementes mit der Trägerfläche des Lagerrings oder des Einstellrings anbietet. Dazu wird bevorzugt ein geeigneter Hochtemperaturkleber eingesetzt. Durch die Verklebung des Gleitelementes ist weiterhin sichergestellt, dass selbst kleine Unebenheiten zwischen der Trägerfläche des Einstellrings oder des Lagerrings und dem Gleitelement ausgeglichen werden und damit Hohlräume vermieden werden, die sich nachteilig auf die Fixierung bzw. die Wirkungsweise der gegeneinander verschwenkbaren Bauteile auswirkt.

Als Maßnahme um das Gleitelement sicher mit dem Lagerring oder dem Einstellring zu verbinden ist vorgesehen, das Gleitelement so zu gestalten, dass dieses zumindest bereichsweise den Lagerring oder den Einstellring umschließt. Unabhängig von der Gestaltung des Gleitelementes ist damit dieses Bauteil formschlüssig an einem Lagerring des Ausrücklagers oder dem Einstellring befestigt. Für einen als Belag gestalteten Lagerring bietet es sich an, den Lagerring bzw. den Einstellring als Armierung vorzusehen, der bereichsweise vom Werkstoff des Gleitelementes umschlossen ist.

Weiterhin schließt die Erfindung ein als separates Bauteil gestaltetes Gleitelement ein. Dieses vorzugsweise ebenfalls durch ein Spritzgießverfahren aus einem thermoplastischen Kunststoff hergestellte Gleitelement ist bevorzugt mittels einer Verklebung kraftschlüssig an der Trägerfläche des Lagerrings oder des Einstellrings befestigt.

### Kurze Beschreibung der Zeichnungen

Nachfolgend werden Ausführungsbeispiele der Erfindung in insgesamt 3 Figuren dargestellt und erläutert. Es zeigen:
- Figur 1: in einem Halbschnitt ein erfindungsgemäßes Ausrücklager in Verbindung mit einer Ausrückvorrichtung, bei der das dem Einstellring zugeordnete Gleitelement an dem umlaufenden inneren Lagerring abgestützt ist;
- Figur 2: ein Ausrücklager, dessen drehstarr angeordneter innerer Lagerring verschwenkbar zum Einstellring angeordnet ist;
- Figur 3: ein Ausrücklager, dessen umlaufender äußerer Lagerring von dem Gleitelement umschlossen ist, an dessen Außenseite ein Einstellring verschwenkbar abgestützt ist.

### Detaillierte Beschreibung der Zeichnungen

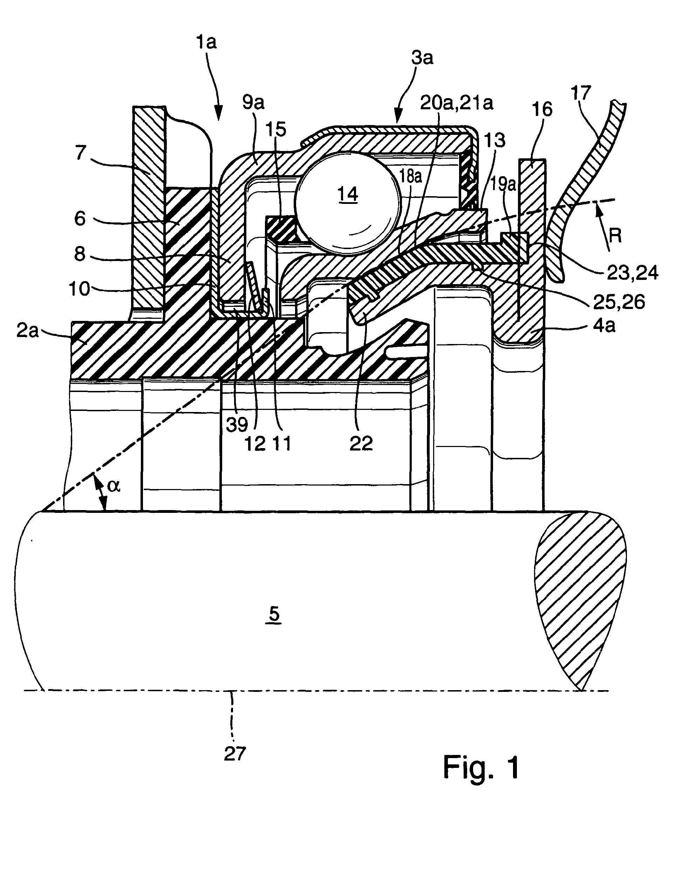

Die Figur 1 zeigt die Ausrückvorrichtung 1a, bestehend aus einem Gehäuse 2a, einem Ausrücklager 3a sowie einem Einstellring 4a. In einer Einbaulage ist das Gehäuse 2a auf einer Führungshülse geführt, welche eine Antriebswelle 5 konzentrisch umschließt, die eine Brennkraftmaschine mit einem Schaltgetriebe verbindet. An einem Bord 6 des Gehäuses 2a greift auf einer Seite beispielsweise eine Gabel oder eine Schwinge eines Betätigungsgliedes 7 an, welches über einen Seilzug oder über einen Aktuator mit einem Kupplungspedal im Fahrgastraum des Fahrzeugs verbunden ist. An der Gegenseite des Bordes 6 stützt sich mit einem Ringboden 8 der Außenring 9a des Ausrücklagers 3a ab. Zwischen dem Ringboden 8 und dem Bord 6 ist ein Halteblech 10 eingesetzt, das innenseitig u-förmig gestaltet, den Ringboden 8 innenseitig umgreift und an dem vom Bord 6 abgewandten Ende eine Bördelung 11 bildet. Zur Erzielung einer kraftschlüssigen Abstützung des Ringbodens 8 an dem Bord 6 ist eine Tellerfeder 12 vorgesehen, welche zwischen der Bördelung 11 und dem Ringboden 8 abgestützt ist. Ein sich in radialer Richtung einstellender Ringspalt 39 zwischen dem Halteblech 10 und dem Ringboden 8 ermöglicht eine Selbstjustierung des Ausrücklagers 3a gegenüber dem Gehäuse 2a. Das als Schrägschulterlager ausgebildete Ausrücklager 3a ist versehen mit einem drehstarr angeordneten Außenring 9a und einem umlaufenden Innenring 13a, zwischen denen Wälzkörper 14 in einem Käfig 15 geführt sind.

An der von den Wälzkörpern 14 abgewandten Seite stützt sich an dem Innenring 13a der Einstellring 4a ab, an dessen Ringflansch 16 stirnseitig eine der Schalttrennkupplung zugeordnete Tellerfeder 17 bzw. deren Federzungen kraftschlüssig anliegen. In einer Kontaktzone 18a zwischen den übereinstimmend aus Stahl hergestellten Bauteilen, dem Innenring 13a und dem Einstellring 4a ist ein Gleitelement 19a vorgesehen. Zur Erzielung einer selbsttätigen Ausrichtung bzw. Verschwenkung des Ausrücklagers 3a gegenüber dem Einstellring 4a bilden die unmittelbar gegeneinander abgestützten Bauteile, der Innenring 13a sowie der Einstellring 4a jeweils komplementär angeordnete Kugelkalottensegmente 20a, 21 a. Das an dem Einstellring 4a lagefixierte Gleitelement 19a erstreckt sich vom Ringflansch 16 über die gesamte Länge einer Aufnahme 22 des Einstellrings 4a und bildet dabei ebenfalls ein Kugelkalottensegment, d. h. einen konvex gestalteten Abschnitt, der kraftschlüssig an der konkav gestalteten Gegenfläche des Innenrings 13a anliegt.

Das Gleitelement 19a ist vorzugsweise kraftschlüssig durch eine Klebung an dem Einstellring 4a befestigt. Alternativ dazu kann ein derartiges Gleitelement 19a auch als ein Belag unmittelbar auf die Aufnahme 22 des Einstellrings 4a aufgespritzt werden. Zur Erzielung einer Verdrehsicherung ist das Gleitelement 19a mit mehreren umfangsverteilt angeordneten Nocken 23 versehen, die formschlüssig in entsprechende Aussparungen 24 des Ringflansches 16 eingreifen. Alternativ oder zusätzlich ist das Gleitelement 19a im Bereich der Aufnahme 22 mit Fixierzapfen 25 versehen, die in Nuten 26 oder Ausnehmungen eingreifen. Die Kontaktzone 18a verläuft ausgehend von einer Symmetrieachse 27 der Ausrückvorrichtung 1a unter einem Winkel "α". Die Kugelkalottensegmente 20a, 21 a sind radienförmig gestaltet, gekennzeichnet durch "R".

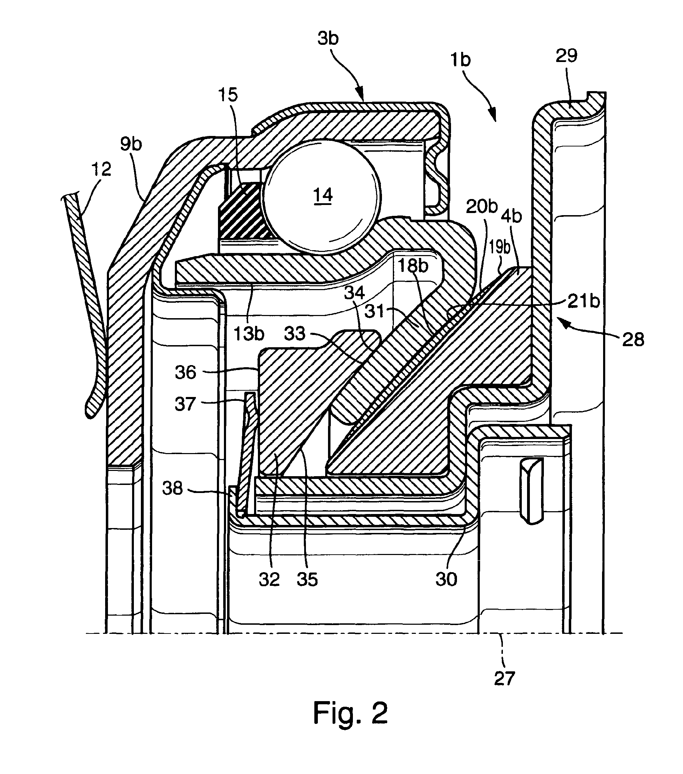

Die Figur 2 zeigt das Ausrücklager 3b in Verbindung mit der Ausrückvorrichtung 1 b. Danach ist das Ausrücklager 3b mit einem umlaufenden Außenring 9b und einem drehstarr angeordneten Innenring 13b versehen, zwischen denen in einem Käfig 15 eingesetzte Wälzkörper 14 geführt sind. Im eingebauten Zustand ist das Ausrücklager 3b zwischen einer mit der in Figur 2 nicht abgebildeten Schalttrennkupplung verbundenen Tellerfeder 12 und einer in Figur 2 ebenfalls nicht abgebildeten Vordruckfeder zusammenwirkenden Einstellring 4b angeordnet. Dabei ist der Einstellring 4b einem Halteelement 28 zugeordnet, an dessen Flansch 29 eine nicht abgebildete Vordruckfeder abgestützt ist. Das Halteelement 29 ist auf einem axial verschiebbaren Bördelring 30 positioniert, welcher im eingebauten Zustand mit einem Kolben verbunden ist, welcher auf einer Führungshülse gleitet, die wiederum eine die Brennkraftmaschine mit dem Schaltgetriebe verbindende Antriebswelle 5 (wie in Fig.1 abgebildet) konzentrisch umschließt. Der Innenring 13b ist über einen schräg nach innen verlaufend ausgerichteten Flansch 31 an einem dem Einstellring 4b zugeordneten Gleitelement 19b abgestützt. Zumindest in der Kontaktzone 18b zwischen dem Flansch 31 des Innenrings 13b und dem Einstellring 4b bilden diese gegeneinander abgestützten Bauteile Kugelkalottensegmente 20b, 21 b. Der Formgebung der Kugelkalottensegmente 20b, 21 b angepasst ist das Gleitelement 19b geformt. Alternativ dazu kann der Einstellring 4b abgeflacht sein, wobei das zugeordnete Gleitelement 19b außenseitig als Kugelkalottensegment 20b ausgebildet ist.

Von der Kontaktzone 18b abgewandt stützt sich auf der gegenüberliegenden Seite an dem Flansch 31 ein Druckring 32 ab. Dabei bildet der Flansch 31 wie auch der Druckring 32 in einem Kontaktbereich 33 ebenfalls Kugelkalottensegmente 34, 35. Rechtwinklig zu der Symmetrieachse 27 der Ausrückvorrichtung 1b stützt sich an einer Stirnseite 36 des Druckrings 32 die Tellerfeder 37 ab, welche innenseitig an einem Bord 38 des Bördelrings 30 fixiert ist.

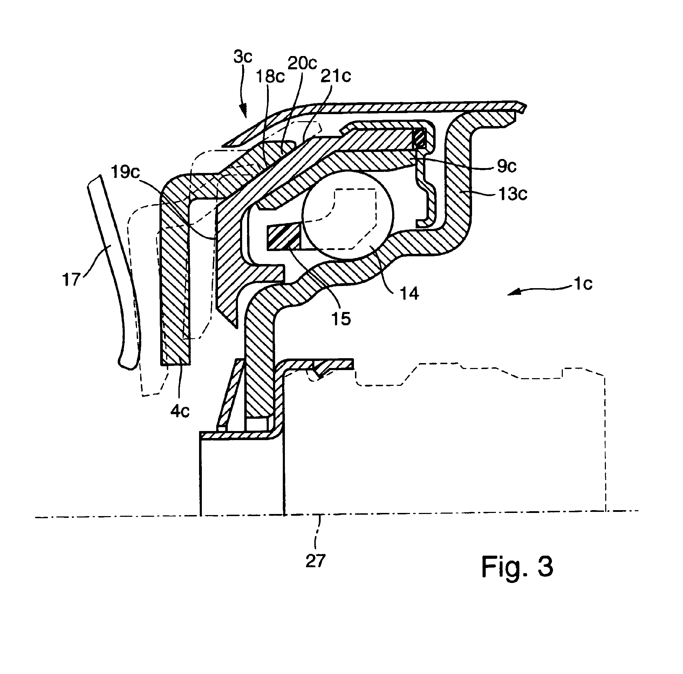

In Figur 3 ist das Ausrücklager 3c im Halbschnitt abgebildet, versehen mit dem drehstarr angeordneten Innenring 13c sowie dem umlaufenden Außenring 9c, zwischen denen im Käfig 15 eingesetzt, die Wälzkörper 14 geführt sind. Der Außenring 9c ist außenseitig von dem Gleitelement 19c umschlossen, an dem wiederum der Einstellring 4c abgestützt ist. Übereinstimmend ist der Einstellring 4c und das Gleitelement 19c in einer Kontaktzone 18c mit Kugelkalottensegmenten 20c, 21 c versehen. An dem weitestgehend scheibenartig gestalteten Einstellring 4c, der in einer Neutralstellung, die der schraffierten Position entspricht, sowie in beiden Extremstellungen abgebildet ist, d. h. in denen der Einstellring 4c zum Gleitelement 19c verschwenkt ist, stützt sich die Tellerfeder 17 der Schalttrennkupplung ab.

### Bezugszahlen

- 1a: Ausrückvorrichtung
- 1b: Ausrückvorrichtung
- 1c: Ausrückvorrichtung
- 2a: Gehäuse
- 3a: Ausrücklager
- 3b: Ausrücklager
- 3c: Ausrücklager
- 4a: Einstellring
- 4b: Einstellring
- 4c: Einstellring
- 5: Antriebswelle
- 6: Bord
- 7: Betätigungsglied
- 8: Ringboden
- 9a: Außenring
- 9b: Außenring
- 9c: Außenring
- 10: Halteblech
- 11: Bördelung
- 12: Tellerfeder
- 13a: Innenring
- 13b: Innenring
- 13c: Innenring
- 14: Wälzkörper
- 15: Käfig
- 16: Ringflansch
- 17: Tellerfeder
- 18a: Kontaktzone
- 18b: Kontaktzone
- 18c: Kontaktzone
- 19a: Gleitelement
- 19b: Gleitelement
- 19c: Gleitelement
- 20a: Kugelkalottensegment
- 20b: Kugelkalottensegment
- 20c: Kugelkalottensegment
- 21a: Kugelkalottensegment
- 21b: Kugelkalottensegment
- 21c: Kugelkalottensegment
- 22: Aufnahme
- 23: Nocken
- 24: Aussparung
- 25: Fixierzapfen
- 26: Nut
- 27: Symmetrieachse
- 28: Halteelement
- 29: Flansch
- 30: Bördelring
- 31: Flansch
- 32: Druckring
- 33: Kontaktbereich
- 34: Kugelkalottensegment
- 35: Kugelkalottensegment
- 36: Stirnseite
- 37: Tellerfeder
- 38: Bord
- 39: Ringspalt

## Patentansprüche

1. Selbsteinstellendes Ausrücklager für eine in Kraftfahrzeugen eingesetzte Schalttrennkupplung, wobei das Ausrücklager (3a, 3b, 3c) als ein Schrägschulterlager gestaltetes Wälzlager aufgebaut ist, mit einem drehstarr angeordneten Lagerring und einem umlaufenden Lagerring, sowie zwischen beiden Lagerringen geführte Wälzkörper (14) und wobei zur Erzielung einer schwenkbaren Anordnung des Ausrücklagers (3a, 3b, 3c), ein Einstellring (4a, 4b, 4c) in einer Kontaktzone (18a, 18b, 18c) ein Kugelkalottensegment (20a, 20b, 20c) aufweist, das an einem komplementär ausgebildeten Kugelkalottensegment (21 a, 21 b, 21 c) eines Lagerrings abgestützt ist, wobei in der Kontaktzone (18a, 18b, 18c) ein aus einem thermoplastischen Kunststoff hergestelltes Gleitelement (19a, 19b, 19c) eingesetzt ist.

2. Ausrücklager nach Anspruch 1, bei dem als Werkstoff für das Gleitelement (19a, 19b, 19c) PA 46 CF 30 /PTFE 5/H vorgesehen ist.

3. Ausrücklager nach Anspruch 1, wobei der Einstellring (4a, 4b, 4c) im Bereich der Kontaktzone (18a, 18b, 18c) dem Außenring (9a, 9b, 9c) oder dem Innenring (13a, 13b, 13c) des Ausrücklagers (3a, 3b, 3c) zugeordnet ist.

4. Ausrücklager nach Anspruch 1, wobei eines der Bauteile Außenring (9a, 9b, 9c), Innenring (13a, 13b, 13c) oder der Einstellring (4a, 4b, 4c) im Bereich der Kontaktzone (18a, 18b, 18c) zur Bildung des Gleitelementes (19a, 19b, 19c) mit einem Belag aus PA 46 CF 30 /PTFE 5 /H beschichtet ist.

5. Ausrücklager nach Anspruch 1, wobei zur Bildung des Gleitelementes (19a, 19b, 19c) ein Spritzgießverfahren vorgesehen ist.

6. Ausrücklager nach Anspruch 5, wobei das Gleitelement (19a, 19b, 19c) zumindest bereichsweise den Außenring (9a, 9b, 9c), den Innenring (13a, 13b, 13c) oder den Einstellring (4a, 4b, 4c) allseitig umschließt.

7. Ausrücklager nach Anspruch 1, wobei in der Kontaktzone (18a, 18b, 18c) zwischen dem Einstellring (4a, 4b, 4c) und einem Lagerring einem dieser Bauteile ein separates aus dem Werkstoff PA 46 CF 30 / PTFE 5 /H hergestelltes Gleitelement (19a, 19b, 19c) zugeordnet ist.

## Claims

1. Self-aligning release bearing for a gearshift clutch used in automotive vehicles, said release bearing (3a, 3b, 3c) being constructed as a rolling bearing in the form of an angular contact bearing comprising a rotationally fixed bearing ring and a rotating bearing ring, with rolling elements (14) guided between the two bearing rings, wherein, for achieving a pivotal arrangement of the release bearing (3a, 3b, 3c), an adjusting ring (4a, 4b, 4c) comprises a spherical cup segment (20a, 20b, 20c) in a contact zone (18a, 18b, 18c), which spherical cup segment (20a, 20b, 20c) is supported on a spherical cup segment (21 a, 21 b, 21 c) of complementary shape on one of the bearing rings, and wherein a sliding element (19a, 19b, 19c) made of a thermoplastic plastic material is inserted into the contact zone (18a, 18b, 18c).

2. Release bearing according to claim 1, wherein the base material of the sliding element (19a, 19b, 19c) is PA 46 CF 30/PTFE 5/H.

3. Release bearing according to claim 1, wherein, in the region of the contact zone (18a, 18b, 18c), the adjusting ring (4a, 4b, 4c) is associated to the outer ring (9a, 9b, 9c) or the inner ring (13a, 13b, 13c) of the release bearing (3a, 3b, 3c).

4. Release bearing according to claim 1, wherein, for forming the sliding element (19a, 19b, 19c) one of the components, outer ring (9a, 9b, 9c), inner ring (13a, 13b, 13c) or adjusting ring (4a, 4b, 4c), is coated in the region of the contact zone (18a, 18b, 18c) with a layer of PA 46 CF 30/PTFE 5/H.

5. Release bearing according to claim 1, wherein an injection moulding method is used for forming the sliding element (19a, 19b, 19c).

6. Release bearing according to claim 5, wherein the sliding element (19a, 19b, 19c) surrounds the outer ring (9a, 9b, 9c), the inner ring (13a, 13b, 13c) or the adjusting ring (4a, 4b, 4c) at least region-wise on all sides.

7. Release bearing according to claim 1, wherein, in the contact zone (18a, 18b, 18c) between the adjusting ring (4a, 4b, 4c) and one of the bearing rings, a sliding element (19a, 19b, 19c) made separately out of the material PA 46 CF 30/PTFE 5/H is associated to one of said two components.

## Revendications

1. Butée de débrayage à alignement automatique pour un embrayage utilisé dans des véhicules automobiles, ladite butée (3a, 3b, 3c) de débrayage étant construite sous la forme d'un palier à roulement à contact oblique comprenant un anneau de roulement qui est immobilisé en rotation et un anneau de roulement rotatif, ainsi que des corps roulants (14) guidés entre ces deux anneaux de roulement, dans laquelle butée de débrayage, pour réaliser un agencement pivotant de la butée (3a, 3b, 3c) de débrayage, un anneau d'ajustage (4a, 4b, 4c) comprend, dans une zone de contact (18a, 18b, 18c), un segment (20a, 20b, 20c) de calotte sphérique qui est supporté sur un segment (21 a, 21 b, 21 c) de calotte sphérique à forme complémentaire prévu sur l'un des anneaux de roulement, et un élément (19a, 19b, 19c) de glissement fabriqué en un thermoplastique est inséré dans la zone de contact (18a, 18b, 18c).

2. Butée de débrayage selon la revendication 1, dans laquelle le matériau de base de l'élément (19a, 19b, 19c) de glissement est du PA 46 CF 30/PTFE 5/H.

3. Butée de débrayage selon la revendication 1, dans laquelle, dans la zone de contact (18a, 18b, 18c), l'anneau d'ajustage (4a, 4b, 4c) est associé à l'anneau extérieur (9a, 9b, 9c) ou à l'anneau intérieur (13a, 13b, 13c) de la butée (3a, 3b, 3c) de débrayage.

4. Butée de débrayage selon la revendication 1, dans laquelle, pour former l'élément (19a, 19b, 19c) de glissement, l'un des composants, anneau extérieur (9a, 9b, 9c), anneau intérieur (13a, 13b, 13c) ou anneau d'ajustage (4a, 4b, 4c), est revêtu, dans la région de la zone de contact (18a, 18b, 18c), d'une couche de PA 46 CF 30/PTFE 5/H.

5. Butée de débrayage selon la revendication 1, dans laquelle l'élément (19a, 19b, 19c) de glissement est formé par coulage par injection.

6. Butée de débrayage selon la revendication 5, dans laquelle l'élément (19a, 19b, 19c) de glissement entoure, au moins par régions, l'anneau extérieur (9a, 9b, 9c), l'anneau intérieur (13a, 13b, 13c) ou l'anneau d'ajustage (4a, 4b, 4c) de tous côtés.

7. Butée de débrayage selon la revendication 1, dans laquelle, dans la zone de contact (18a, 18b, 18c) entre l'anneau d'ajustage (4a, 4b, 4c) et l'un des anneaux de roulement, un élément (19a, 19b, 19c) de glissement fabriqués séparément en le matériau PA 46 CF 30/PTFE 5/H est associé à l'un desdits composants.
